# EUROPEAN PATENT APPLICATION

(11) **EP 2 549 024 A1**
(43) Date of publication of application: **23.01.2013**
(21) Application number: 12175743.9
(22) Date of filing: 10.07.2012
(51) Int. Cl.: E03C 1/02, F16L 11/127, F16L 11/22, F21V 33/00, F21V 23/00, F21Y 101/02

(54) **Flexible hose for sanitary fittings to be used with lighting devices**

(30) Priority: 18.07.2011 IT MI20110246 U
(71) Applicant: P.G.I. Parigi Group International S.p.A., 20052 Monza (MB) (IT)
(72) Inventor: Parigi, Cesare, I-20052 Monza (MB) (IT)
(74) Representative: Cicogna, Franco

(57) **Abstract**

A flexible hose (1) for sanitary fittings for use with lighting devices comprises a flexible plastics material core (2) encompassed by a braid (3) and including a coaxial inner duct, extending through an overall length of the hose and forming at least two separated ducts, a primary water duct and a secondary duct, therein electric wires (7) may be arranged.

## Description

### BACKGROUND OF THE INVENTION

The present invention relates to a flexible hose for sanitary fittings, in particular to be used with lighting devices.

As it is known, sanitary fittings, both for therapeutic purposes, based on the so-called chromotherapy, and for aesthetic applications, frequently comprise lighting devices.

In particular, faucets and shower blower fittings comprising illuminating or illuminator assemblies, usually of a LED type, adapted to diffuse, together with water, a white or colored light are also well known.

In such a fitting, the LEDs must obviously be power supplied and this is conventionally carried out by conductor wires engaged in the water delivery tubes.

Though the illuminating systems associated with sanitary fittings operate at a low voltage, it is obviously necessary to provide a perfect insulation of the conductor wires, since an electric leakage would lead to a power waste and a quick material deterioration.

Accordingly, prior sanitary fittings including illuminating device are at present very expensive.

### SUMMARY OF THE INVENTION

The aim of the present invention is to provide such a flexible hose for sanitary fittings, specifically designed and suitable for use with illuminating devices associated with a tap water delivery system.

Within the scope of the above mentioned aim, a main object of the invention is to provide such a flexible hose which may be used with any sanitary fittings, and also in already existing ones.

Another object of the invention is to provide such a flexible hose which may be made by available making methods and materials and which, moreover, is very competitive from a mere economic standpoint.

A further object of the invention is to provide such a flexible hose which is very reliable and safe in operation.

According to one aspect of the present invention, the above mentioned aim and objects, as well as further objects, which will become more apparent hereinafter, are achieved by a flexible hose for sanitary fittings, for use with lighting devices, **characterized in that** said flexible hose comprises a flexible plastics material core encompassed by a braid.

Said plastics material core comprises a coaxial inner passage, extending through the overall hose length and forming at least two separated ducts, that is a primary water duct and a secondary duct, therein electric wires may be arranged.

### BRIEF DESCRIPTION OF THE DRAWINGS

Further characteristics and advantages of the present invention will become more apparent hereinafter from the following disclosure of a preferred, though not exclusive, embodiment of the invention, which is illustrated, by way of an indicative but not limitative example, in the accompanying drawings, where:
Figure 1 is a perspective view of a shower blowing fitting, with a lighting device including the flexible hose according to the present invention;

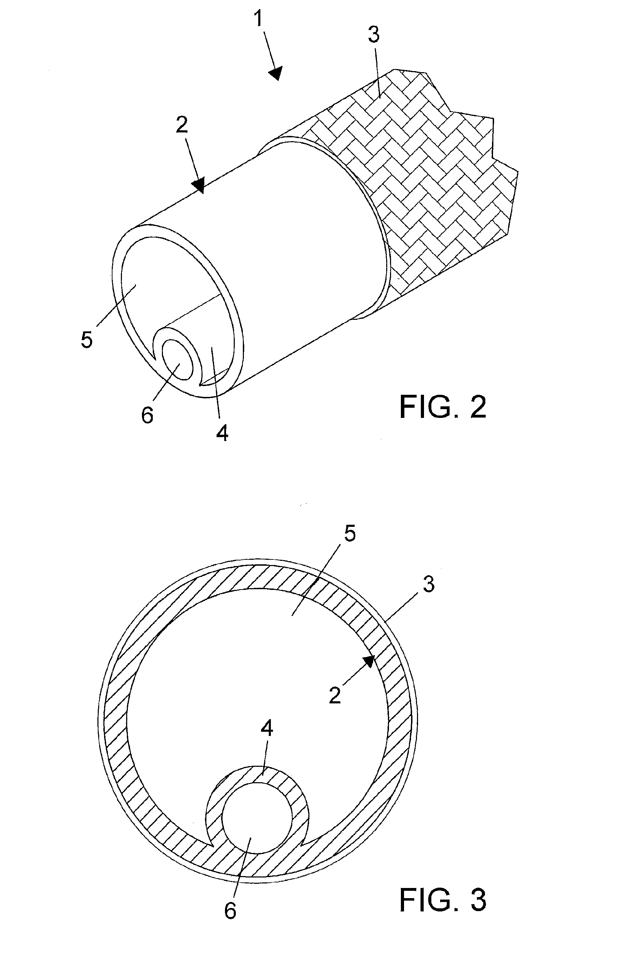

Figure 2 is a perspective view showing a flexible hose length;
   and
Figure 3 is a cross-sectional view of the flexible hose according to the present invention.

### DESCRIPTION OF THE PREFERRED EMBODIMENTS

With reference to the number references of the above mentioned figures, the flexible hose for sanitary fittings to be used with lighting devices according to the present invention, which has been generally indicated by the reference number 1, comprises a flexible plastics material core 2, encompassed by a braid 3.

According to the present invention, the plastics material core 2 is made, for example, by an extruding method so as to provide a coaxial inner passage or lumen 4 extending through the overall length of the hose.

Thus, said inner core 2 defines at least two separated ducts, that is a primary water duct 5 and a secondary duct 6 in which electric conductors or wires 7 may be arranged.

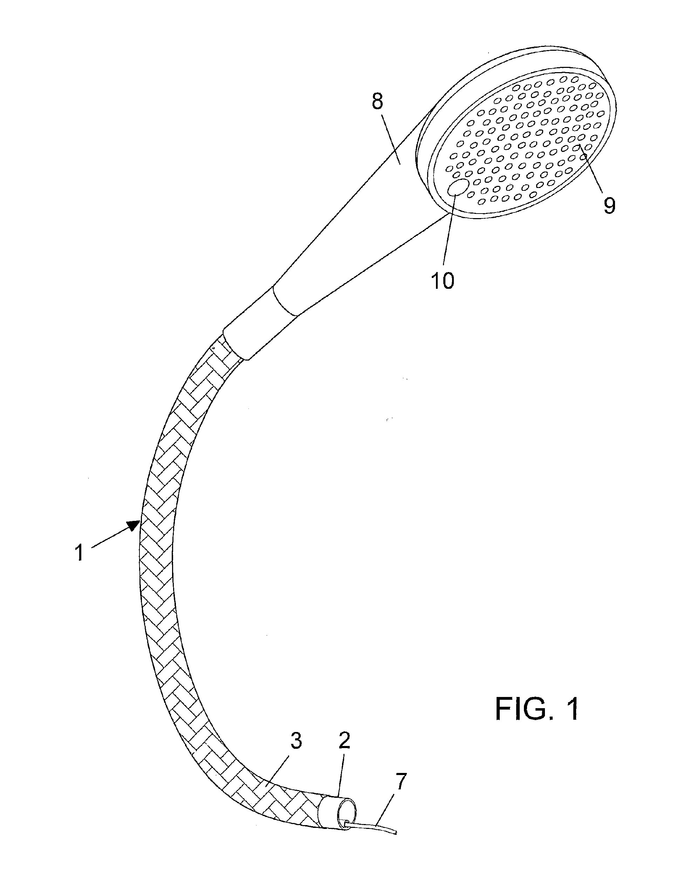

Figure 1 shows an application example of the flexible hose 1 according to the present invention.

Said flexible hose 1, in particular, may be advantageously used for water supplying a shower assembly 8, including a blower fitting 9, in which a lighting device 10 comprising either one or more LEDs is arranged, said lighting device 10 being powered by the wires or conductors 7 extending through the secondary chamber 6 of the core 2 of the flexible hose 1.

It has been found that the invention fully achieves the intended aim and objects.

In fact, the invention has provided a flexible hose for sanitary fittings, specifically designed and suitable for use with lighting devices.

The secondary chamber or duct 6 of the hose core 2, in particular, is arranged for engaging therein one or more electric wires or conductors which are tightly insulated from the water supplying chamber or duct 5.

The flexible hose according to the present invention has a low making cost while providing a perfect insulation of the related electric devices through the overall system life.

In practicing the invention, the used materials, as well as the contingent size and shapes may be any, depending on requirements.

## Claims

1. A flexible hose for sanitary fittings for use with lighting devices, **characterized in that** said flexible hose comprises a flexible plastics material core encompassed by a braid, said plastics material core including a coaxial inner duct, extending through an overall length of said hose and forming at least two separated ducts, a primary water duct and a secondary duct, therein electric wires may be arranged.

2. A flexible hose, according to claim 1, **characterized in that** said flexible plastics material core is an extruded plastics material core.

3. A flexible hose, according to claim 1, **characterized in that** said flexible hose is suitable for water supplying a shower assembly including a blower fitting including a lighting device, comprising one or more LEDs, said lighting device being powered by electric wires arranged in said secondary duct.
